# FASCICULE DE BREVET EUROPEEN

(11) **EP 2 151 272 B1**
(45) Date de publication et mention de la délivrance du brevet: **05.10.2016**
(21) Numéro de dépôt: 09167493.7
(22) Date de dépôt: 07.08.2009
(51) Int. Cl.: B01D 53/30, B01D 53/56, B01D 53/86, B01D 53/75

(54) **Procédé et installation d'épuration de fumées de combustion contenant des oxydes d'azote**
Verfahren und Anlage zur Reinigung von Verbrennungsrauchgasen, die Stickoxide enthalten
Method and installation for purifying combustion fumes containing nitrogen oxides

(30) Priorité: 08.08.2008 FR 0855500
(43) Date de publication de la demande: 10.02.2010
(73) Titulaire: LAB SA, 69007 Lyon (FR)
(72) Inventeur: Tabaries, Franck, 83190, Ollioules (FR); Siret, Bernard, 69200, Venissieux (FR)
(74) Mandataire: Lavoix

(56) Documents cités:
- EP-A- 0 803 278
- EP-A1- 0 885 649
- WO-A1-91/07219
- DE-A1- 19 652 902
- DE-A1- 19 705 663
- US-A- 5 176 088
- US-A- 5 233 934
- US-A- 5 853 683
- US-A- 6 120 580
- US-A1- 2005 084 434

## Description

La présente invention est relative à l'épuration des fumées de combustion contenant des oxydes d'azote.

Lors de la combustion de matières comme le charbon ou le fuel, par exemple, en vue de production d'énergie, ou bien lors de l'incinération de déchets, les fumées issues de la combustion contiennent une proportion appréciable d'oxydes d'azote et ne peuvent être rejetées à l'atmosphère sans traitement.

Lors de la combustion, d'autres polluants, en particulier les gaz acides comme l'acide chlorhydrique ou le dioxyde de soufre, sont émis ainsi que des poussières et des particules solides. D'une manière généralisée, les oxydes d'azote doivent être éliminés et plusieurs technologies sont disponibles et bien acceptées industriellement :
- On peut, tout d'abord, agir au niveau de la combustion proprement dite. Des brûleurs dits « bas-NO_{X} » peuvent alors être utilisés dans le cas de combustion du charbon ou du fuel, ou bien on peut modifier l'excès d'air, ou son étagement, de façon à ce que, dans les zones très chaudes, la formation des oxydes d'azote, à partir de l'azote de l'air, soit minimisée. Il a été également proposé d'enrichir l'atmosphère de combustion en oxygène ou de recycler du CO₂ pour accomplir cet effet. Cette approche est limitée dans son efficacité et se révèle de plus peu commode à mettre en oeuvre dans le cas de l'incinération de déchets, et ne peut aucunement suffire à amener la teneur en oxydes d'azote dans les fumées de combustion en deçà de 150 mg/Nm³ de NO_{X}.
- Une seconde approche consiste à injecter un réactif, usuellement de l'ammoniac ou de l'urée, dans une zone particulière de la combustion. Le réactif se décompose alors et les radicaux générés réagissent pour empêcher la formation des oxydes d'azote ou détruire ceux déjà formés. Là encore, cette solution connaît des limites et il est difficile de dépasser des rendements de destruction de plus de 70%, sauf à consentir une fuite d'ammoniac dépassant la dizaine de milligrammes par Nm³. Là encore, pour le cas particulier de l'incinération de déchets, on ne peut pas obtenir beaucoup mieux que 120 mg/Nm³ de NOx sans avoir une fuite ammoniac importante. Cette solution, dite SNCR (Selective Non Catalytic Reduction) n'est donc pas suffisante pour répondre aux besoins des unités modernes.

Traditionnellement, la technique suivie quand on a besoin d'obtenir des teneurs de NOx inférieures à 80 mg/Nm₃ consiste à recourir à la SCR (Selective Catalytic Reduction). On fait réagir les oxydes d'azote avec un réactif approprié sur un catalyseur maintenu à une température relativement élevée. Le réactif employé est typiquement l'ammoniac, ou bien encore l'urée. Si cette technique est maintenant bien maîtrisée, certaines contraintes et limitations, comme l'existence de poisons (oxydes alcalins, phosphore, arsenic), et de composés pouvant se déposer et bloquer les pores du catalyseur (sulfates et hydrogéno-sulfates d'ammonium, SO₃...) obligent, soit à une épuration poussée dés fumées, soit à opérer à une température supérieure à 250°C pour limiter l'impact de ces composés qui désactivent le catalyseur. Ceci est particulièrement vrai pour les installations d'incinération de déchets, dont les fumées de combustion contiennent une variété de polluants bien plus considérable que pour les unités de combustion de gaz ou de charbon. Souvent, les unités de combustion sont déjà équipées d'une solution SNCR mais puisque celle-ci ne suffit pas à obtenir des niveaux de NO_{X} assez bas pour satisfaire aux nouvelles exigences réglementaires, il est nécessaire d'y adjoindre, en aval des traitements de fumées existants, un réacteur SCR. Si cette option permet de faire travailler la SCR dans de bonnes conditions, l'intégration thermique ne peut se faire qu'au prix d'échangeurs de type process-process coûteux. L'adjonction de ces équipements (échangeurs process-process, réacteurs) crée aussi une perte de charge supplémentaire et coûte de l'énergie.

Certains polluants comme SO₃, ou indirectement SO₂ partiellement oxydé en SO₃, qui se combinent à l'ammoniac pour former hydrogenosulfates et sulfates d'ammonium déposant et bloquant le catalyseur, sont particulièrement à craindre. Il est connu que, quand la teneur en SOx augmente, on doit faire travailler le catalyseur à plus haute température et il a même été proposé, par FR-A-2 876 597, d'asservir la température à le teneur en SO_{X}.

EP-A-0 885 649, qui est considéré comme l'état de la technique le plus proche des objets des revendications 1 et 10, divulgue un procédé d'épuration de fumées de combustion contenant des oxydes d'azote, dans lequel successivement :
- on injecte un premier réactif de dénitrification SNCR dans une zone où les fumées possèdent une température comprise entre 700°C et 900°C, de préférence égale à 850°C,
- on fait circuler ces fumées dans une chaudière de manière à abaisser la température des fumées,
- alors que les fumées présentent une température inférieure à 350°C, on injecte dans ces fumées, d'une part, un réactif pour diminuer la concentration des polluants acides et un second réactif de dénitrification SCR,
- on fait circuler les fumées dans un filtre intégrant un réacteur catalytique SCR, et
- on élimine au moins une fraction des polluants acides.

Ceci étant précisé, l'invention vise à proposer un procédé qui assure une épuration fiable des fumées traitées, et qui combine de façon astucieuse les dénitrifications SCR et SNCR, tout en économisant l'énergie et en minimisant l'investissement.

A cet effet, elle a pour objet un procédé selon la revendication 1 annexée.

Des caractéristiques avantageuses de ce procédé font l'objet des revendications 2 à 9 annexées.

L'invention a également pour objet une installation selon la revendication 10 annexée. Des caractéristiques avantageuses de cette Installation font l'objet des revendications 11 à 13 annexées.

L'invention se rapporte au traitement des fumées de combustion, et en particulier au traitement des fumées de combustion des ordures ménagères, de déchets industriels ou de déchets spéciaux.

Selon l'invention, on combine pour le traitement des fumées les étapes suivantes :
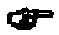 Une dénitrification du type SNCR, dans laquelle on introduit, dans une zone de température comprise entre 800 et 1 100°C, un réactif tel que l'ammoniac NH₃ ou l'urée. La quantité de réactif injecté est régulée de façon à ne réaliser qu'une dénitrification partielle, limitée entre 30% et 70%. Ceci permet d'opérer une dénitrification préalable, tout en limitant la fuite d'ammoniac et en conservant des émissions de N₂O minimales, typiquement inférieures à 10 à 15 mg/Nm³. En effet, comme on l'a vu ci-dessus, lorsque cette dénitrification est très poussée, la présence d'ammoniac et de N₂O est alors très substantielle, de sorte que ta dénitrification partielle conforme à l'invention est avantageuse sur le plan environnemental. De plus, grâce à une étape d'analyse explicitée ci-après, on peut s'assurer que les fumées sortant de cette première étape contiennent par exemple moins de 20 mg/Nm3 de protoxyde d'azote et par exemple moins de 50 mg/Nm3 d'ammoniac.
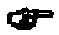 L'injection d'un réactif, tel que la chaux ou la magnésie, apte à capter les oxydes de soufre et notamment le trioxyde de soufre SO₃, dans une zone aval de la combustion, à une température comprise entre 500 et 1 100°C. On injecte une quantité proportionnelle au débit des fumées, à raison d'un ratio stoechiométrique molaire de 0.2 à 1 par rapport au SO₂ présent. Ce réactif permet de réduire la concentration en oxydes de soufre, ce qui permet de protéger le catalyseur de l'étape postérieure de dénitrification, décrite ci-après, qui est sensible à de tels composés.
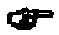 Le passage dans un économiseur ou une chaudière, qui a pour conséquence d'abaisser la température des fumées entre 160 et 500°C, et de préférence entre 180 et 250 °C.
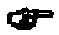 Le passage dans un électrofiltre, lequel intègre des éléments catalytiques assurant une dénitrification catalytique de finition. Il est avantageux que le catalyseur soit incorporé dans le collecteur de sortie de l'électrofiltre ou, éventuellement, dans les gaines directement raccordées à ce collecteur. Cette configuration permet en effet un gain énergétique par réduction des pertes de charges, par comparaison avec l'utilisation d'un réacteur SCR séparé de l'électrofiltre.
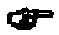 Une mesure de la concentration de l'un, ou de plusieurs des gaz suivants : N₂O (protoxyde d'azote), NH₃ (ammoniac) et CO (monoxyde de carbone). Le résultat de cette mesure permet d'ajuster en permanence la quantité de réactif alimentée à l'étape de dénitrification préalable de type SNCR. Comme vu ci-dessus, la régulation de cette quantité permet de limiter la fuite d'ammoniac, ainsi que la concentration en N₂O. Ce même analyseur intègre aussi une mesure de la teneur en oxydes d'azote (NO_{X}), en vue de la mise en oeuvre de la dénitrification postérieure de type SCR.

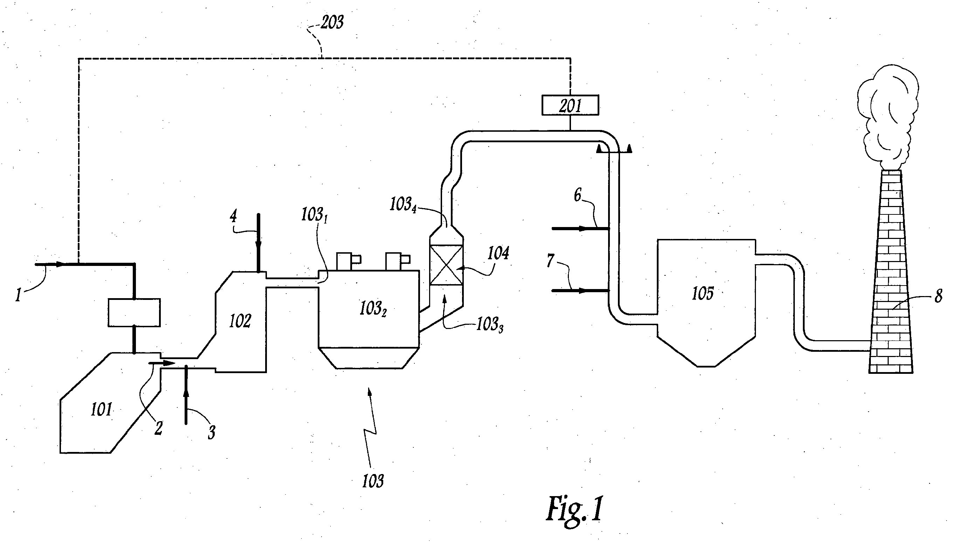

L'invention va être décrite ci-après, en référence à la figure unique annexée, donnée à titre d'exemple non limitatif, laquelle est une vue schématique illustrant une installation d'épuration des fumées conformes à l'invention.

En référence à cette figure, l'installation conforme à l'invention comprend tout d'abord une unité de combustion 101, qui brûle, par exemple, mais de manière non limitative des ordures ménagères, des déchets industriels ou des déchets spéciaux. Cette unité 101 reçoit un flux (1) d'un réactif destiné à réaliser une dénitrification non catalytique et sélective, dite SNCR. D'une manière connue en soi le réactif (1), constitué d'ammoniac, d'urée solide ou d'une solution d'urée, est injecté dans une zone où la température des fumées est comprise entre 800 et 1 100°C, notamment entre 850°C et 1100°C.

Dans la présente demande, on appelle réactif SNCR un réactif propre à être mis en oeuvre dans une dénitrification de type SNCR, alors qu'on appelle réactif SCR et catalyseur SCR un réactif et un catalyseur pouvant être mis en oeuvre dans une dénitrification du type SCR.

La dénitrification préliminaire, de type SNCR, présente un rendement limité de manière volontaire à une valeur comprise entre 30% et 70%, de préférence entre 40% et 50%. Ceci signifie que, en aval de cette dénitrification primaire, entre 30% et 70% des oxydes d'azote ont été éliminés des fumées de combustion 2, par rapport à une situation où aucun réactif de dénitrification ne serait injecté. On rappellera que, comme présenté dans le préambule de la demande, il est techniquement possible d'obtenir des rendements au niveau de la SNCR supérieurs à 70%. Ceci est cependant obtenu au prix d'une fuite d'ammoniac de deux dizaines à plusieurs dizaines de mg/Nm³ de NH₃, ainsi que d'une fuite substantielle de N₂O.

Les fumées issues de 101 traversent ensuite un économiseur ou une chaudière 102, de technologie connue en soi, dont le but est de récupérer l'énergie thermique véhiculée parles fumées (2). On injecte par ailleurs un réactif 3, destiné à réduire la concentration des oxydes de soufre SO_{X}, et particulièrement de trioxyde de soufre SO₃. Le réactif 3 est injecté dans une zone où la température des fumées est comprise entre 500°C et 1100°C, de préférence entre 850°C et 1000°C. Cette zone se situe typiquement immédiatement en amont de la chaudière 102, ou bien encore dans une zone de cette chaudière opérant dans la plage de température évoquée ci dessus.

La quantité de réactif 3 introduite correspond à un ratio stoechiométrique compris entre 0.2 et 1 fois la stoechiométrie molaire, par rapport au dioxyde de soufre présent. A titre d'exemple, une unité produisant 100 000 Nm³/h de fumées, et dont les fumées (2) contiendraient 200 mg/Nm³ de SO₂, à savoir soit 20 kg/h de SO₂, soit 0.31 kilomoles/h de SO₂, demanderait selon l'invention entre 0.062 et 0.31 kmole/h de chaux, ou 4.6 à 23 kg/h de chaux, si la chaux est utilisée en tant que réactif. Le réactif (3) utilisé peut être, par exemple, de la chaux, de la chaux à grand surface spécifique, ou de la magnésie.

Dans le but de poursuivre la dénitrification, qui n'a été faite que de manière partielle par la SNCR, on injecte un réactif (4) susceptible de mettre en oeuvre une dénitrification supplémentaire de type SCR, avec un catalyseur 104. Ce réactif (4), qui est par exemple, de l'ammoniac anhydre, une solution ammoniacale, ou de l'urée en solution, est injecté dans une zone de température entre 160°C et 500°C. Cette zone est typiquement située immédiatement en aval de la chaudière 102, ou bien correspond à une zone de la chaudière ou de l'économiseur, opérant dans la plage de température ci-dessus.

On notera que l'invention fait également intervenir un électrofiltre 103, de type connu en soi, qui est disposé en aval de la chaudière 102 et de la zone d'injection du réactif 4. De manière habituelle, cet électrofiltre 103 comprend une entrée 103₁, ainsi qu'une zone active 103₂, dans laquelle sont par exemple placées des plaques destinées à capter les poussières par effet électrostatique. Cette partie active débouche dans un collecteur de fumée 103₃, lui-même mis en communication avec une gaine de sortie 103₄.

On notera que, de façon particulièrement avantageuse, le lit de catalyseur 104 est intégré à l'électrofiltre 103, en étant disposé en particulier en aval de la zone active 103₂. Ceci signifie que ce catalyseur peut être situé notamment dans le collecteur de sortie 103₃, ce qui est d'ailleurs la variante préférée. A titre d'alternative, on peut égal prévoir de placer ce catalyseur dans la gaine de sortie 103₄. De cette manière, on minimise les pertes de charge, ce qui assure un avantage économique substantiel, tant en terme d'investissement que de coût énergétique, par rapport à une situation classique où le réacteur de dénitrification SCR serait séparé de l'électrofiltre.

Le réactif 4, dont on a vu qu'il est injecté en amont de l'électrofiltre, traverse ce dernier et réagit au niveau du catalyseur de SCR 104, afin d'achever la dénitrification des fumées. La quantité de réactif 4 est pilotée à partir d'informations sur la concentration en oxydes d'azote, mesurée en aval du réacteur 104 par l'intermédiaire d'un analyseur.

De façon typique, on peut choisir une plage de consigne relative à cette concentration en oxydes d'azote. Si l'analyseur mesure une concentration instantanée en oxydes d'azote qui est en dehors de cette plage, la quantité de réactif (4) est alors modifiée afin que cette concentration en oxydes d'azote soit à nouveau comprise dans une telle plage.

En vue de la régulation de la première étape de dénitrification, à savoir de type SNCR correspondant au réactif 1, l'analyseur 201 mesure la concentration d'au moins un des polluants suivants : CO, N₂O et NH₃. Dans le cas où au moins une valeur instantanée de concentration dépasse une valeur prédéterminée, l'analyseur 201 commande l'injection du réactif 1, par l'intermédiaire d'une ligne 203, de manière à réduire la quantité de réactif 1 admise. Ceci permet de s'assurer que cette dénitrification préalable SNCR ne génère pas une quantité inacceptable de sous-produits toxiques, tels que ceux dont on mesure la concentration par l'analyseur 201.

Comme cela ressort de ce qui précède, on choisit avantageusement une valeur seuil en au moins un de ces trois polluants et on réduit la quantité de réactif 1, si au moins une valeur de concentration mesurée est supérieure à une valeur cible correspondante. A titre d'exemple non imitatif, on peut choisir les valeurs seuils suivantes :
- pour le N₂O : 30 mg/Nm³, de préférence 20 mg/Nm³,
- pour le NH₃ : 10 mg/Nm³, de préférence 5 mg/Nm³,
- pour le CO : 100 mg/Nm³, de préférence 50 mg/Nm³.

La valeur de ces concentrations seuils peut bien évidemment être variable, en fonction de différents paramètres. Il peut s'agir des législations propres à chaque état, ou encore des contraintes liées à chaque installation.

La mesure de la concentration en un des gaz précités permet par conséquent de régler la quantité de réactif 1 injectée. Ce réglage peut également être assuré de manière « manuelle ». Dans ce dernier cas, l'analyseur signale, par exemple de manière visuelle, un dépassement d'au moins une concentration à l'opérateur, de sorte que celui-ci peut modifier le débit du premier réactif admis.

L'analyseur 201 peut assurer une double fonction, à savoir mesurer d'une part la concentration d'au moins un des trois polluants précités et, d'autre part, la concentration en oxyde d'azote. Cependant, à titre de variante, on peut prévoir d'utiliser deux analyseurs distincts. Dans cette optique, celui 201 assure d'une part la mesure des trois polluants précités, à savoir CO, N₂O et NH₃,

Il est alors prévu un analyseur supplémentaire, non représenté susceptible de mesurer la concentration en oxydes d'azote NO_{X}, aux fins de pilotage de la quantité de réactif 4 injectée. On notera que cet analyseur supplémentaire peut être placé au voisinage de celui 201, ou bien être intégré à la cheminée 8.

Enfin, les fumées dénitrifiées sont épurées des gaz acides, tels que HCl ou SO₂, par l'intermédiaire de technologies de type connu en soi. En référence à la figure unique, on retrouve à cet effet un filtre à manche 105, en amont duquel sont injectés des réactifs divers, par exemple de la chaux ou du bicarbonate de sodium par la ligne 6, ainsi que du charbon actif par la ligne 7. Les fumées ainsi traitées sont enfin envoyées à une cheminée 8, également de type classique.

On notera que l'intégration du réacteur SCR 104 à l'électrofiltre 103 permet de réduire la consommation énergétique et la perte de charge. Ceci signifie en particulier que, selon l'invention, il ne peut pas y avoir de réchauffeur ou d'échangeur de chaleur entre 103 et 104 de sorte que le réacteur 104 opère sensiblement à la température de l'électrofiltre 103. Celle-ci est en général faible, comprise par exemple entre 160 et 250°C. Or, à ces températures faibles, le catalyseur du réacteur 104 est sensible aux poussières, aux poisons et en particulier à SO₃. Pour cette raison, l'adjonction du réactif (3), destiné à contrôler le niveau d'oxydes de soufre, permet de protéger le catalyseur 104.

Dans une variante, la quantité de réactif (3) à fournir est régulée à partir d'informations délivrées par un capteur indiquant le point de rosée acide ou la teneur en SO₃.

Dans une autre variante, toujours destinée à s'assurer que la dénitrification catalytique SNCR de 101 est réalisée de manière très partielle, le besoin total de réactifs de dénitrification (1) et (4) est déterminé à partir des informations d'un analyseur de NO_{X} situé en aval du réacteur 104. Comme on l'a vu ci-dessus, cet analyseur de NO_{X} peut être celui 201, mesurant en outre la concentration des trois polluants mentionnés précédemment, ou bien être constitué par un analyseur distinct de celui 201.

Le rapport des flux de réactifs entre celui (1) et celui (4) est fixé, de façon à ce que le flux (1) fournisse entre 25 et 60% des besoins totaux correspondant à la somme des flux (1) et (4). Ceci signifie que, lorsque les réactifs 1 et 4 sont les mêmes, on utilise entre 25% et 60% en poids de réactif total, au niveau de l'étape de dénitrification préalable SNCR. Ces quantités respectives sont modulées lorsque les réactifs utilisés sont différents, en fonction dé l'efficacité par unité de masse de ces deux réactifs.

Enfin, on notera que l'injection du réactif 4 conduit à la décomposition au moins partielle de ce dernier, en particulier en ammoniac NH₃. Or, cet ammoniac contribue à modifier la conductivité électrique des poussières, ce qui tend à augmenter la performance de l'électrofiltre 103.

## Revendications

1. Procédé d'épuration de fumées de combustion contenant des oxydes d'azote, dans lequel :
- on injecte un premier réactif (1) de dénitrification SNCR, dans une zone où les fumées (2) possèdent une température comprise entre 800°C et 1100°C, de préférence entre 850 °C et 1100°C,
- on Injecte dans ces fumées (2) un réactif (3) de contrôle de la teneur en oxydes de soufre, dans une zone où ces fumées possèdent une température comprise entre 500°C et 1100°C,
- on fait ensuite circuler ces fumée dans une chaudière (102) ou un économiseur, de manière à abaisser substantiellement leur température,
- on injecte ensuite dans ces fumées un second réactif (4) de dénitrification SCR, dans une zone où la température des fumées est comprise entre 160°C et 500°C, de préférence entre 180°C et 250°C,
- on fait ensuite circuler ces fumées dans un électrofiltre (103), lequel intègre un réacteur catalytique (104) SCR, propre à utiliser le second réactif (4) de dénitrification SCR,
- on analyse ensuite les fumées ayant traversé ce réacteur SCR, en mesurant la concentration d'au moins un des gaz suivants : N₂O, NH₃ et CO, et en mesurant la concentration en oxydes d'azote; et
- on élimine ensuite au moins une fraction des polluants acides de ces fumées, notamment de type SO₂ et HCl,
procédé dans lequel on injecte le premier réactif (1) en une quantité telle que la dénitrification primaire SNCR présente un rendement de 30% à 70%, de préférence de 40% à 50%, tout en réduisant cette quantité du premier réactif (1) lorsque la valeur mesurée de concentration d'au moins un des gaz précités dépasse une valeur seuil prédéterminée correspondante, chacun des gaz précités étant associé à sa propre valeur seuil prédéterminée, et
dans lequel on pilote la quantité de second réactif (4) injectée à partir d'informations liées à la mesure de la concentration en oxydes d'azote.

2. Procédé selon la revendication 1, **caractérisé en ce qu'**on choisit les valeurs seuils suivantes :
- pour le N₂O : 30 mg/Nm³, de préférence 20 mg/Nm³,
- pour NH₃ : 10 mg/Nm³, de préférence 5 mg/Nm³,
- pour le CO : 100 mg/Nm³, de préférence 50 mg/Nm³.

3. Procédé selon l'une des revendications précédentes, dans lequel on choisit une plage de consigne de la concentration en oxydes d'azote en aval du réacteur (104), et on modifie la quantité de second réactif (4) injectée si la valeur de la concentration mesurée en oxydes d'azote est en dehors de cette plage.

4. Procédé selon l'une des revendications 1 à 3, dans lequel on injecte le réactif (3) de contrôle des dioxydes de soufre, en une quantité telle que le ratio stoechiométrique molaire par rapport au dioxyde de soufre présent dans les fumées soit compris entre 0,2 et 1.

5. Procédé selon l'une des revendications 1 à 3, dans lequel on mesure le point de rosée acide en aval du point d'injection du réactif (3) de contrôle des dioxydes de soufre, et on régule la quantité du réactif injecté de façon telle que ce point de rosée est inférieur à une valeur prédéterminée.

6. Procédé selon l'une des revendications précédentes, dans lequel le réactif (3) destiné à contrôler les oxydes de soufre est de la chaux, de la chaux à grande surface spécifique ou de la magnésie.

7. Procédé selon l'une des revendications précédentes, dans lequel le second réactif (4) de dénitrification SCR est de l'ammoniac, une solution ammoniacale ou une solution d'urée.

8. Procédé selon l'une des revendications précédentes, dans lequel on alimente les premier (1) et second (4) réactifs de dénitrification, en des quantités telles que le rapport des flux de réactifs entre celui (1) et celui (4) est fixé, de façon à ce que le flux (1) fournisse entre 25% et 60% des besoins totaux correspondant à la somme des flux (1) et (4).

9. Procédé selon la revendication 8, dans lequel, les premier (1) et second (4) réactifs étant les mêmes, la quantité du premier réactif représente entre 25% et 60% de la somme des poids respectifs des quantités des premier et second réactifs.

10. Installation d'épuration de fumées de combustion contenant des oxydes d'azote, comprenant.dans le sens d'écoulement des fumées ;
- des moyens d'injection d'un premier réactif (1) de dénitrification SNCR, adaptés pour injecter le premier réactif en une quantité telle que la dénitrification primaire SNCR présente uni rendement de 30% à 70%, de préférence de 40% à 50% ;
- des moyens d'injection d'un réactif (3) de contrôle de la teneur en oxydes de soufre ;
- une chaudière (102) ou un économiseur, destiné(e) à abaisser substantiellement la température des fumées ;
- des moyens d'injection d'un second réactif (4) de dénitrification SCR;
- un électrofiltre (103), intégrant un réacteur catalytique SCR (104) destiné à utiliser le second réactif de dénitrification ;
- un premier analyseur (201), propre à mesurer la concentration d'au moins un des gaz suivants : N₂O, NH₃ et CO en aval du réacteur SCR (104), et à signaler lorsque la valeur mesurée d'au moins un des gaz précités dépasse une valeur seuil prédéterminée correspondante afin que la quantité du premier réactif (1) soit réduite par les moyens d'injection du premier réactif, chacun des gaz précités étant associé à sa propre valeur seuil prédéterminée ;
- un second analyseur (201) propre à mesurer la concentration en oxydes d'azote dans les fumées, en aval du réacteur SCR (104) ; et
- un épurateur (105) destiné à éliminer au moins une partie des polluants acides des fumées, du type SO₂ et HCl.

11. Installation selon la revendication 10, dans laquelle le catalyseur de dénitrification SCR (104) est intégré dans le collecteur de sortie (103₃) de l'électrofiltre (103).

12. Installation selon la revendication 10, dans laquelle le catalyseur de dénitrification SCR (104) est intégré dans la gaine de sortie (103₄) de l'électrofiltre (103).

13. Installation selon l'une des revendications 10 à 12, dans laquelle le premier et le second analyseurs (201) sont confondus.

## Patentansprüche

1. Verfahren zur Aufbereitung von Verbrennungsrauch enthaltend Stickstoffoxide, wobei:
- Einspritzen eines ersten SNCR-Denitrifikationsreagenzes (1) in eine Zone, in der der Rauch (2) eine Temperatur zwischen 800 °C und 1100 °C, vorzugsweise zwischen 850 °C und 1100 °C haben,
- Einspritzen eines Reagenzes (3) zur Kontrolle des Gehalts an Schwefeloxiden in diesen Rauch (2) in einer Zone, in der der Rauch eine Temperatur zwischen 500 °C und 1100 °C hat,
- Anschließend Zirkulieren-lassen dieses Rauchs in einem Heizkessel (102) oder einem Sparer, um seineTemperatur wesentlich herabzusetzen,
- anschließend Einspritzen eines zweiten SCR-Denitrifikationsreagenzes (4) in diesen Rauch in einer Zone, in der die Temperatur des Rauchs zwischen 160 °C und 500 °C, vorzugsweise zwischen 180 °C und 250 °C ist,
- anschließend Zirkulieren-lassen dieses Rauchs in einem Elektrofilter (103), der einen katalytischen SCR-Reaktor (104) integriert, geeignet das zweite SCR-Denitrifikationsreagenz (4) zu verwenden,
- anschließend Analysieren des Rauchs, der den SCR-Reaktor durchlaufen hat, indem die Konzentration mindestens eines der folgenden Gase gemessen wird: N₂O, NH₃ und CO und indem die Konzentration an Stickstoffoxiden gemessen wird; und
- anschließend Eliminieren mindestens einer Fraktion saurer Schadstoffe dieses Rauchs, insbesondere des Typs SO₂ und HCl,
wobei das erste Reagenz (1) in einer Menge eingespritzt wird, sodass die primäre SNCR-Denitrifikation eine Ausbeute von 30 % bis 70 %, vorzugsweise von 40 % bis 50 % aufweist, wobei diese Menge des ersten Reagenz (1) reduziert wird, wenn der gemessene Wert der Konzentration mindestens eines der vorgenannten Gase einen entsprechend vorbestimmten Grenzwert überschreitet, wobei jedes der vorgenannten Gase mit seinem angemessenen, vorbestimmten Grenzwert assoziiert wird, und
wobei die Menge des zweiten eingespritzten Reagenzes (4) auf die mit der Messung der Konzentration der Stickstoffoxide in Verbindung stehenden Informationen hin gesteuert wird.

2. Verfahren gemäß Anspruch 1, **dadurch gekennzeichnet, dass** die folgenden Grenzwerte ausgewählt werden:
- für N₂O: 30 mg/Nm³, vorzugsweise 20 mg/Nm³,
- für NH₃: 10 mg/Nm³, vorzugsweise 5 mg/Nm³
- für CO: 100 mg/Nm³, vorzugsweise 50 mg/Nm³.

3. Verfahren gemäß einem der vorangehenden Ansprüche, wobei ein Sollbereich der Konzentration an Stickstoffoxiden stromabwärts des Reaktors (104) gewählt wird und die Menge des zweiten eingespritzten Reagenzes (4) verändert wird, wenn der gemessene Konzentrationswert der Stickstoffoxide außerhalb dieses Sollbereichs ist.

4. Verfahren gemäß einem der Ansprüche 1 bis 3, wobei das Reagenz (3) zur Kontrolle der Schwefeldioxide in einer Menge eingespritzt wird, sodass das molare stöchiometrische Verhältnis zu Schwefeldioxiden in dem Rauch zwischen 0,2 und 1 ist.

5. Verfahren gemäß einem der Ansprüche 1 bis 3, wobei der saure Taupunkt stromabwärts von der Einspritzstelle des Reagenzes (3) zur Kontrolle der Schwefeldioxide gemessen wird und die Menge an eingespritzten Reagenzes so reguliert wird, dass der Taupunkt unterhalb eines vorbestimmten Wertes ist.

6. Verfahren gemäß einem der vorangehenden Ansprüche, wobei das Reagenz (3) bestimmt für die Kontrolle der Schwefeldioxide Kalk, Kalk mit einer großen spezifischen Oberfläche oder Magnesiumoxid ist.

7. Verfahren gemäß einem der vorangehenden Ansprüche, wobei das zweite SCR-Denitrifikationsreagenz (4) Ammoniak, eine Ammoniak-Lösung oder eine Harnstoff-Lösung ist.

8. Verfahren gemäß einem der vorangehenden Ansprüche, wobei das erste (1) und zweite (4) Denitrifikationsreagenz in solchen Mengen zugeführt werden, sodass das Flussverhältnis der Reagenzien (1) und (4) festgesetzt ist, sodass der Fluss (1) zwischen 25 % und 60 % des vollständigen Bedarfs liefert, entsprechend der Summe des Flusses (1) und (4).

9. Verfahren gemäß Anspruch 8, wobei das erste (1) und das zweite (4) Reagenz die gleichen sind, wobei die Menge des ersten Reagenzes zwischen 25 % und 60 % der Summe der jeweiligen Gewichte der Mengen des ersten und des zweiten Reagenzes darstellt.

10. Aufbereitungsanlage für Verbrennungsrauch enthaltend Stickstoffoxide, umfassend in Abflussrichtung des Rauchs:
- Mittel zur Einspritzung eines ersten SNCR-Denitrifikationsreagenzes (1), angepasst, um das erste Reagenz in einer Menge einzuspritzen, sodass die primäre SNCR-Denitrifikation eine Ausbeute von 30 % bis 70 %, vorzugsweise 40 % bis 50 % aufweist;
- Mittel zur Einspritzung eines Reagenzes (3) zur Kontrolle des Gehalts an Schwefeloxiden;
- einen Heizkessel (102) oder einen Sparer, bestimmt zum wesentlichen Herabsenken der Temperatur des Rauchs;
- Mittel zur Einspritzung eines zweiten SCR-Denitrifikationsreagenzes (4);
- einen Elektrofilter (103), der einen katalytischen SCR-Reaktor (104) integriert, bestimmt zur Verwendung des zweiten Denitrifikationsreagenzes;
- einen ersten Analysator (201), geeignet zum Messen der Konzentration mindestens eines der folgenden Gase: N₂O, NH₃ und CO stromabwärts des SCR-Reaktors (104) und zum Signalisieren, wenn der gemessene Wert mindestens eines der vorgenannten Gase einen entsprechend vorbestimmten Grenzwert überschreitet, um die Menge des ersten Reagenz (1) durch die Mittel zur Einspritzung des ersten Reagenzes zu reduzieren, wobei jedes der vorgenannten Gase mit seinem angemessenen, vorbestimmten Grenzwert assoziiert wird;
- einen zweiten Analysator (201) geeignet zum Messen der Konzentration an Stickstoffoxiden in dem Rauch, stromabwärts des SCR-Reaktors (104); und
- einen Aufreiniger (105) bestimmt zum Eliminieren mindestens eines Teils der sauren Schadstoffe des Rauchs des Typs SO₂ und HCl.

11. Anlage gemäß Anspruch 10, wobei der SCR-Denitrifikationskatalysator (104) in dem Ausgangsabflussrohr (103₃) des Elektrofilters (103) integriert ist.

12. Anlage gemäß Anspruch 10, wobei der SCR-Denitrifikationskatalysator (104) im Ausgangsleerrohr (103₄) des Elektrofilters (103) integriert ist.

13. Anlage gemäß einem der Ansprüche 10 bis 12, wobei der erste und der zweite Analysator (201) zusammenfallen.

## Claims

1. Method for purifying combustion fumes containing nitrogen oxides, wherein:
- a first SNCR denitrification reagent (1) is injected into a zone where the fumes (2) have a temperature of between 800 °C and 1100 °C, preferably of between 850 °C and 1100°C,
- a reagent (3) for controlling the content of sulphur oxides is injected into said fumes (2) in a zone where said fumes have a temperature of between 500 °C and 1100 °C,
- said fumes are subsequently circulated in a boiler (102) or an economiser so as to substantially lower the temperature thereof,
- a second SCR denitrification reagent (4) is subsequently injected into said fumes in a zone where the temperature of the fumes is of between 160 °C and 500 °C, preferably of between 180 °C and 250 °C,
- said fumes are subsequently circulated in an electrostatic precipitator (103) which incorporates a SCR catalytic reactor (104) capable of using the second SCR denitrification reagent (4),
- the fumes that have passed through said SCR reactor are then analysed by measuring the concentration of at least one of the following gases: N₂O, NH₃ and CO, and by measuring the concentration of nitrogen oxides; and
- at least one fraction of the acid pollutants of said fumes are subsequently eliminated, in particular of the type SO₂ and HCl,
method in which the first reagent (1) is injected in an amount such that the first SNCR denitrification has a yield of 30 % to 70 %, preferably 40 % to 50 %, while reducing said amount of the first reagent (1) when the measured value of the concentration of at least one of the mentioned gases exceeds a corresponding predetermined threshold value, each of the mentioned gases being associated with its own predetermined threshold value, and in which the amount of the second reagent (4) that is injected is controlled based on information related to the measurement of the concentration of nitrogen oxides.

2. Method according to claim 1, **characterised in that** the following threshold values are selected:
- for the N₂O: 30 mg/Nm³, preferably 20 mg/Nm³,
- for the NH₃: 10 mg/Nm³, preferably 5 mg/Nm³,
- for the CO: 100 mg/Nm³, preferably 50 mg/Nm³.

3. Method according to either of the preceding claims, wherein a set value range of the concentration of nitrogen oxides downstream of the reactor (104) is selected and the amount of second reagent (4) injected is modified if the value of the measured concentration of nitrogen oxides is outside this range

4. Method according to any of claims 1 to 3, wherein the reagent (3) for controlling the sulphur dioxides is injected in an amount such that the stoichiometric molar ratio relative to the sulphur dioxide present in the fumes is of between 0.2 and 1.

5. Method according to any of claims 1 to 3, wherein the acid dew point downstream of the injection site of the reagent (3) for controlling the sulphur dioxides is measured and the amount of reagent injected is adjusted such that said dew point is lower than a predetermined value.

6. Method according to any of the preceding claims, wherein the reagent (3) intended for controlling the sulphur oxides is calcium hydroxide, calcium hydroxide having a large specific surface area, or magnesia.

7. Method according to any of the preceding claims, wherein the second SCR denitrification reagent (4) is ammonia, an ammonia solution or a urea solution.

8. Method according to any of the preceding claims, wherein the first (1) and second (4) denitrification reagents are supplied in amounts such that the reagent flow ratio between one (1) and the other (4) is fixed such that the flow (1) provides between 25 % and 60 % of the total requirements corresponding to the sum of the flows (1) and (4).

9. Method according to claim 8, wherein, since the first (1) and second (4) reagents are the same, the amount of the first reagent is of between 25 % and 60 % of the sum of the respective weights of the amounts of the first and second reagents.

10. Facility for purifying combustion fumes containing nitrogen oxides, comprising, in the flow direction of the fumes:
- means for injecting a first SNCR denitrification reagent (1), which means are suitable for injecting the first reagent in an amount such that the first SNCR denitrification has a yield of 30 % to 70 %, preferably 40 % to 50 %;
- means for injecting a reagent (3) for controlling the content of sulphur oxides;
- a boiler (102) or an economiser intended for substantially lowering the temperature of the fumes;
- means for injecting a second SCR denitrification reagent (4);
- an electrostatic precipitator (103) that incorporates a SCR catalytic reactor (104) intended for using the second SCR denitrification reagent;
- a first analyser (201) capable of measuring the concentration of at least
one of the following gases: N₂O, NH₃ and CO, downstream of the SCR reactor (104), and of indicating when the measured value of at least one of the mentioned gases exceeds a corresponding predetermined threshold value, in order for the amount of the first reagent (1) to be reduced by the means for injecting the first reagent, each of the mentioned gases being associated with its own predetermined threshold value;
- a second analyser (201) capable of measuring the concentration of nitrogen oxides in the fumes, downstream of the SCR reactor (104); and
- a purifier (105) intended for eliminating at least some of the acid pollutants of the fumes, of the type SO₂ and HCl.

11. Facility according to claim 10, wherein the SCR denitrification catalyst (104) is built into the outlet collector (103₃) of the electrostatic precipitator (103)

12. Facility according to claim 10, wherein the SCR denitrification catalyst (104) is built into the outlet duct (103₄) of the electrostatic precipitator (103).

13. Facility according to any of claims 10 to 12, wherein the first and the second analysers (201) are combined.
